Europäisches Patentamt

European Patent Office

Office européen des brevets

(11) Publication number: **0 533 154 A1**

# EUROPEAN PATENT APPLICATION

(21) Application number: **92115909.1**

(22) Date of filing: **17.09.92**

(51) Int. Cl.⁵: **C08L 23/04**

(30) Priority: **18.09.91 US 762105**

(43) Date of publication of application:
**24.03.93 Bulletin 93/12**

(84) Designated Contracting States:
**AT BE DE DK ES FR GB GR IT NL SE**

(71) Applicant: **PHILLIPS PETROLEUM COMPANY**
**5th and Keeler**
**Bartlesville Oklahoma 74004(US)**

(72) Inventor: **Coutant, William Richard**
**5840 Meadowcrest**
**Bartlesville, OK 74006(US)**
Inventor: **Welch, Melvin Bruce**
**4750 Lewis Drive**
**Bartlesville, OK 74006(US)**
Inventor: **Mozer, Larry Phelps**
**1116 Meadow Lane**
**Bartlesville, OK 74006(US)**
Inventor: **McDaniel, Max Paul**
**1601 Melmart Drive**
**Bartlesville, OK 74006(US)**
Inventor: **Martin, Joel Leonard**
**636 SE Kenwood Drive**
**Bartlesville, OK 74006(US)**

(74) Representative: **Geissler, Bernhard, Dr.jur.,**
**Dipl.-Phys. et al**
**Patent- u. Rechtsanwälte Bardehle**
**-Pagenberg-Dost-Altenburg**
**-Frohwitter-Geissler & Partner Postfach 86 06**
**20 Galileiplatz 1**
**W-8000 München 80 (DE)**

(54) **Ethylene polymers.**

(57) Ethylene polymer blends of a virgin or recycled low molecular weight ethylene polymer produced from a chromium-based catalyst and a high molecular weight ethylene polymer produced from a titanium-based catalyst, exhibit excellent processing characteristics, environmental stress crack resistance and stiffness. These ethylene polymer blends are useful for use in bottle, film, pipe, and/or drum applications.

EP 0 533 154 A1

BACKGROUND OF THE INVENTION

The present invention relates to the production and use of blends of ethylene polymers of different molecular weights. More specifically, the present invention relates to bottle, film, pipe and/or drum grades of ethylene polymer blends.

The production of high density polyethylene, using titanium-based catalysts, can be called a well-developed technology. One of the continuing goals in this technology is to develop catalysts with high productivity so that catalyst removal step(s) can be avoided during or after polymer production. Such high productivity catalysts have been developed in recent years. These catalysts usually produce ethylene polymers with a narrow molecular weight distribution and low environmental stress crack resistance (ESCR). Unfortunately, these ethylene polymers also are difficult to process and use commercially.

The production of high density polyethylene, using chromium-based catalysts, can also be called a well-developed technology. A continuing goal of this technology is also to develop catalysts with high productivity so that catalyst removal step(s) can be avoided during or after polymer production. Such high productivity chromium catalysts have been developed in recent years. These catalysts usually produce ethylene polymers with a broad molecular weight distribution. The resulting ethylene polymers generally have a good ESCR, but an insufficient balance of ESCR and density for many commercial applications.

Thus, polyethylene resins produced with certain high productivity catalysts, in view of their limited physical properties, are not often ideal for applications as a bottle, film, pipe and/or drum forming resin. It would be very desirable to have an ethylene polymer composition available which can be produced with high productivity catalysts and which still has bottle, film, pipe and/or drum grade resin qualities. There is a further specific problem encountered in the production of resins for such applications; the desired physical properties, or characteristics, and the desired processability of the resin are often in conflict. Improvements on processability frequently result in reduced product quality and, conversely, improvements in resin product quality frequently result in reduced processability.

SUMMARY OF THE INVENTION

It is an object of this invention to provide an ethylene polymer resin composition useful for such applications as bottle, film, pipe and/or drum production.

Another object of this invention is to provide ethylene polymer resin mixtures that are satisfactory with respect to both the bottle, film, pipe and/or drum properties and the processability of the resin.

Another object of this invention is to provide ethylene polymer resin compositions which can be made with high productivity olefin polymerization catalysts.

A further object of this invention is to provide an ethylene polymer resin mixture which has good processability.

An important object of this invention is to provide resin compositions having good processability, as well as good physical product characteristics, such as, for example environmental stress crack resistance (ESCR).

These and other objects, advantages, features, details and embodiments of this invention will become apparent to those skilled in the art from the following detailed description of the invention and the claims.

In accordance with this invention, a composition comprising the product of:

a) less than or equal to about 35 weight percent high molecular weight polyethylene, prepared from a titanium-based catalyst system, having the properties comprising:

i) a high load melt index (HLMI) within a range of about 0.2 to about 25 g/10 minutes;

ii) a density within a range of about 0.91 to about 0.94 g/cc;

iii) a heterogeneity index (HI) of less than or equal to about 10; and

iv) a copolymerized comonomer content of about 0.01 to about 10 mole percent of at least one alpha-olefin having from about 3 to about 10 carbon atoms per molecule; and

b) greater than or equal to about 65 weight percent of a low molecular weight polyethylene, prepared from a chromium-based catalyst system, having the properties comprising:

i) a melt index (MI) within a range of about 0.1 to about 5 g/10 minutes;

ii) a density within the range of about 0.945 to about 0.98 g/cc; and

iii) a heterogeneity index (HI) of greater than or equal to about 6.

The polymer blends described herein are useful for bottle, film, pipe and/or drum applications.

## DESCRIPTION OF THE PREFERRED EMBODIMENTS

The polymer properties described in this disclosure have been determined in accordance with the following procedures:

Dart Impact (g): ASTM D 1709-75. Energy needed to rupture one mil thick film upon impact of a free falling dart. This method establishes the weight of the dart dropped from a height of 26 inches which causes 50 percent of the samples to break. The staircase method is used to determine the 50 percent failure level and the missile weight increment is 15 g. In all instances, the film was 1 mil in thickness, unless otherwise indicated.

Tear Resistance (g/mil): ASTM D 1922. This is a modification for polymer film adapted from the Elmendorf tear test used for paper. This method determines the average energy, in grams, required to propagate a tear through 2.5 inches of film in the machine extrusion direction (MD) or transverse direction (TD) as indicated. In all instances, the film was 1 mil in thickness, unless otherwise indicated.

Density (g/ml): ASTM D 1505-68 and ASTM D 1928, Condition C. Determined on a compression molded sample, cooled at about 15°C per minute, and conditioned at room temperature for about 40 hours.

High Load Melt Index (HLMI)(g/10 min); ASTM D 1238-85. Determined at 190°C with a 21,600 gram weight.

Melt Index (MI)(g/10 min): ASTM D 1238-85. Determined at 190°C with a 2,160 gram weight.

Spencer Impact Resistance (J): ASTM D 3420.

Flexural Modulus: ASTM D 790-84.

Tensile Yield: ASTM D 638-84.

Strain Break: ASTM D 638-84.

Environmental Stress Crack Resistance (ESCR)(hours): ASTM D 1693-70 (1980), Conditions A & C.

Weight Average Molecular Weight ($M_w$): Determined by size exclusion chromatography (SEC).

Number Average Molecular Weight ($M_n$): Determined by size exclusion chromatography (SEC).

Heterogeneity Index (HI): Determined by $M_w/M_n$.

The inventive resin compositions are blends of a high molecular weight ethylene polymer, produced from a high productivity titanium-based polymerization catalyst system and low molecular weight ethylene polymer, produced from a high productivity chromium-based polymerization catalyst system. The terms "polymer", "ethylene polymer", and "polyethylene" as used in this disclosure and unless otherwise indicated, refer to homopolymers of ethylene and copolymers of ethylene and a higher alpha-olefin.

## Low Molecular Weight Polymer Portion

The low molecular weight ethylene polymer portion must be produced by a chromium-based catalyst system. Exemplary chromium-based catalyst systems are broadly disclosed in U.S. Patents 3,887,494; 3,900,457; 4,053,436; 4,151,122; 4,294,724; 4,392,990; and 4,405,501, herein incorporated by reference. Generally, a chromium-based catalyst system can be prepared by impregnating an inorganic oxide support with a chromium compound. The product can be calcined under conditions sufficient to convert at least a portion of the chromium to the hexavalent state. Other preparation steps and/or cocatalysts can be incorporated to enhance the resultant catalyst system. While not wishing to be bound by theory, it is believed that most commercially available low molecular weight ethylene polymers produced from chromium-based catalyst systems inherently have some degree of long chain branching.

The low molecular weight polymer portion can be any new or used ethylene homopolymer or an ethylene/alpha-olefin copolymer. As used in this disclosure, a "new" ethylene polymer can be any ethylene polymer, that has never been blown, molded, formed, or the like, other than normal pelletizing, into a final product available for commercial use. Likewise, a "used" ethylene polymer can be any recycled, reground, and/or post-consumer product that previously has been blown, molded, formed, or the like, into a final product, and, optionally, was available and used commercially. If a comonomer is used in conjunction with ethylene, usually, the comonomer is an alpha-olefin with from about 3 to about 20 carbon atoms per molecule. Preferably, the comonomer has from about 3 to about 10 carbon atoms per molecule and most preferably, from 4 to about 8 carbon atoms per molecule for best resultant low molecular weight polymer portion properties, as well as final blend product polymer properties. Generally, the comonomer will comprise less than about 5 mole percent of the low molecular weight ethylene polymer portion. Preferably, the low molecular weight ethylene polymer, if employing a comonomer, will comprise less than about 3 mole percent comonomer, and most preferably will comprise from 0 to 1 mole percent comonomer, for the same reasons given above. If a comonomer is used, the low molecular weight polymer portion will have some short chain branching.

Generally, the properties of the low molecular weight ethylene polymer are those listed below in Table I.

Table I

| Low Molecular Weight Polymer Portion Properties | | | |
|---|---|---|---|
| Parameter | Broad Range | Preferred Range | Most Preferred Range |
| MI, g/10 min | 0.1-5 | 0.1-3 | 0.1-1.5 |
| Density, g/cc | 0.945-0.98 | 0.945-0.97 | 0.95-0.97 |
| HLMI/MI | 30-300 | 45-250 | 55-200 |
| HI, $(M_w/M_n)$ | $\geq 6$ | 6-40 | 6-30 |

The above-disclosed ethylene polymer melt index ranges are characteristic of a low molecular weight polymer that, when combined with the hereinafter disclosed high molecular weight polymer portion, result in excellent processing characteristics and properties for bottle, film, pipe and/or drum applications. Higher or lower melt indices can result in a loss of final blend product processability.

The approximate ranges disclosed for polymer density are characteristic of a low molecular weight polymer that can be blended with a high molecular weight polymer to produce a resin with appropriate densities for bottle, film, pipe and/or drum applications. Higher density, low molecular weight ethylene polymer resins are preferred in order to allow for the addition of low density, high molecular weight titanium-based catalyst produced polymer resins.

The approximate ranges disclosed for the HLMI/MI ratio are characteristic of a low molecular weight ethylene polymer with good processability, i.e., processing characteristics. Generally, a higher HLMI/MI ratio is indicative of better, or easier, processability.

The approximate ranges disclosed for the heterogeneity index are characteristic of an ethylene polymer with a broad molecular weight distribution. The molecular weight distribution needs to be broad in order to supply good processing characteristics of, or for, the resultant polymer blend product.

The low molecular weight ethylene polymer portion generally has a good environmental stress crack resistance (ESCR). Usually, the ESCR of the low molecular weight ethylene polymer portion will be within a range of from about 0 to about >1000 hours (maximum test time), under Condition A. However, the ESCR of the low molecular weight ethylene polymer portion can be enhanced by adding the hereinafter disclosed high molecular weight polymer portion.

Usually, for best resultant blend properties, the final polymer blend will comprise at least about 65 percent, by weight, based on the weight of the resultant blend product, of the low molecular weight polymer and preferably, from about 70 to about 99 weight percent of the low molecular weight polymer. Most preferably, the final blend product will comprise from 70 to 95 weight percent, based on the weight of the resultant blend product, of the low molecular weight portion, in order to achieve improved bottle, film, pipe and/or drum grade resin qualities.

High Molecular Weight Polymer Portion

The high molecular weight portion ethylene polymer must be produced from a titanium-based catalyst system. Exemplary titanium-based catalyst systems are broadly described in U.S. Patents 4,394,291; 4,236,988; and 4,347,158 herein incorporated by reference. Generally, a titanium-based catalyst system can be prepared by reacting a titanium compound and a metal alkyl. Variation and incorporation of other preparation steps, as well as other catalyst system preparation compounds, such as, for example, magnesium and/or silicon compounds, can be incorporated into the catalyst system preparation to enhance the catalyst system.

The high molecular weight ethylene polymer portion must comprise a comonomer. Usually, as with the low molecular weight ethylene polymer portion, the comonomer is an alpha-olefin having from about 3 to about 10 carbon atoms per molecule. Preferably, the comonomer has from about 3 to about 10 carbon atoms per molecule and most preferably, from 4 to 8 carbon atoms for best resultant high molecular weight polymer portion properties, as well as final blend polymer properties. Generally, the comonomer will comprise from about 0.01 to about 10 mole percent of the high molecular weight ethylene polymer portion. Preferably, the high molecular weight ethylene polymer will comprise from about 0.1 to about 8 mole percent comonomer and, most preferably, from 0.5 to 6 mole percent comonomer for best resultant high molecular weight polymer portion properties, as well as final blend product polymer properties.

Generally, the properties of the high molecular weight polymer portion are those listed below in Table II.

Table II

| High Molecular Weight Polymer Portion Properties | | | |
|---|---|---|---|
| Parameter | Broad Range | Preferred Range | Most Preferred Range |
| HLMI, g/10 min | 0.2-25 | 1.5-20 | 2-12 |
| Density, g/cc | 0.91-0.94 | 0.915-0.935 | 0.920-0.935 |
| HI, $(M_w/M_n)$ | $\leq 10$ | 1-10 | 2-7 |

The above-disclosed ethylene polymer high load melt index ranges are characteristic of a high molecular weight polymer that, when combined with the previously disclosed low molecular weight polymer portion, result in excellent processing characteristics and properties for bottle, film, pipe and/or drum applications. Lower HLMI values can require special mixing in order to obtain a uniform blend. Higher HLMI values of the high molecular weight polymer portion can result in a loss of ESCR properties and decreased film strength in the final blend polymer product.

The approximate ranges disclosed for polymer density are characteristic of a high molecular weight polymer that can be blended with a low molecular weight polymer to produce a resin with appropriate densities for bottle, film or pipe and drum applications. Lower density, high molecular weight ethylene polymer resins are preferred in order to allow for the addition of high density, low molecular weight chromium-based catalyst produced polymer resins. Thus, the resultant blend polymer can have better properties, such as, for example, ESCR.

The approximate ranges disclosed for the heterogeneity index are characteristic of an ethylene polymer with a narrow molecular weight distribution. A narrow molecular weight distribution provides for best separation of comonomer distribution for maximizing properties, such as, for example, ESCR and stiffness.

The high molecular weight ethylene polymer portion generally has a very high ESCR. The ESCR of high molecular weight, low density ethylene polymers produced from titanium-based catalysts are so very high, i.e., greater than 1000 hours (maximum test time), under Condition A, that they can not be measured. Thus, the addition of a high molecular weight ethylene copolymer portion to a low molecular weight ethylene polymer portion can enhance the ESCR of the low molecular weight polymer portion.

Usually, for best resultant blend properties, the final polymer blend will comprise up to about 35 percent, by weight, based on the weight of the resultant blend product, of the high molecular weight polymer and preferably from about 1 to about 30 weight percent of the high molecular weight polymer. Most preferably, the final blend product will comprise from 5 to 30 weight percent, based on the weight of the resultant blend product, of the high molecular weight portion, in order to achieve improved bottle, film, pipe and/or drum grade resin qualities.

Blend Ethylene Polymer Product

The high and low molecular weight ethylene polymer portions can be blended in accordance with any method known in the art. Exemplary methods include, but are not limited to, a physical blend of both portions either immediately after polymer production, such as, for example, immediately following polymerization reactors arranged in parallel, or a blend of both portions physically removed from polymerization reactor output; use of one reactor with dual catalyst feed and/or a series of reactors wherein one portion is produced immediately preceding or subsequent to the other portion.

All blending methods have advantages and disadvantages. For example, if a physical blending process is employed, the high and low molecular weight portions do not have to be produced simultaneously, or even at the same physical location. However, if two reactors are available, with parallel production capabilities, both portions can be produced simultaneously and can be blended immediately after polymerization. If two reactors are available, and are connected in series, one polymer portion can be produced and then combined with the second portion during polymerization of the second portion.

Preferably, in order to attain good blend product characteristics, such as, for example, maximum product flexibility, a physical blending process is used. The two components, either in powder, flake, recycle flake, or pellet form, can be preblended or fed simultaneously into an extrusion line. The extrusion line can melt the two polymer portions, and homogenize them molecularly to produce a uniform product. Exemplary types of extrusion lines include, but are not limited to, single screw extrusion, twin screw extrusion, mixer gear pumps, and/or batch mixing. The blending can be done by simply dry blending the two kinds of polymers in fluff (powder) form. Other possibilities to mix the polymers include melt blending in a pelletizing extruder. For example, Banbury® mixers and single or twin screw extruders can be utilized.

The blending conditions depend upon the blending technique employed. If a dry blending of the polymer fluff is the blending technique, the blending conditions can include temperatures from room temperature up to about 120°C and blending times in the range of a few seconds to minutes, such as, for example, 2 seconds to 5 minutes. The preferred method is extrusion blending, wherein two feed lines are input, usually simultaneously, into one extruder. If extrusion blending is used, the temperature of the polymers introduced into the extruder will be generally between room temperature and a temperature near the melting point of the polymer; the outlet temperature of the extrusion blended polymer will be in the range of between the melting point of the polymer and up to 160°C above the melting point, but below the decomposition temperature of the polymer. The individual polymer particles usually remain in the extruder for a time of about 10 seconds to about 15 minutes. If solution blending techniques are employed the blending temperature will generally be 25°C to 50°C above the cloud point of the solution involved.

Stabilizers can be added to each polymer portion prior to blending, or to the blend, after or during blending, to prevent degradation of the polymer portions and blend product, as well as to maintain optimum physical properties. Generally, the properties of the inventive blended ethylene polymer product are those listed below in Table III.

TABLE III

| Blend Product Polymer Properties | | | |
|---|---|---|---|
| Parameter | Broad Range | Preferred Range | Most Preferred Range |
| MI, g/10 min | <1 | 0.04 - 1 | 0.04 - 0.8 |
| Density, g/cc | <0.97 | 0.92-0.965 | 0.930 - 0.965 |
| HI, ($M_w/M_n$) | ≧6 | | >6 |
| ESCR, hrs Condition A | ≧24 | >50 | 50 - >1000 |

The above-disclosed blend product ethylene polymer property ranges result in excellent product characteristics and properties for bottle, film, and pipe and drum applications. However, the most-preferred ranges can be even further narrowed, depending on the application of the final blend product.

Therefore, the most preferred melt index for blown bottle applications is within the range of 0.1 to 0.8 g/10 mins.; for blown film, pipe and/or drum applications is within the range of 0.04 to 0.5 g/10 mins. The most preferred density range for blown bottle applications is within the range of 0.945 to 0.965 g/cc; for blown film applications is within the range of 0.930 to 0.960 g/cc; and for pipe and/or drum applications is within the range of 0.940 to 0.955 g/cc. Practice and application of this invention allows production of ethylene polymers within the ranges of these specifically desired physical characteristics.

The invention will still be more fully understood from the following examples which are intended to illustrate the invention in further preferred embodiments thereof without undue limitation of the scope of the invention.

EXAMPLES

Example I

Virgin Resin Sample Preparation

Blends involving the incorporation of two virgin, i.e., unused, ethylene polymers were prepared in the following manner. The low molecular weight resin portion for these blends was a commercial grade polyethylene, which had a melt index (MI) of 1.19 g/10 min, a high load melt index (HLMI) of 66 g/10 min, and a density of 0.9652 g/cc. The low molecular weight portion was an ethylene polymer and was prepared by polymerizing only ethylene and using a supported chromium catalyst, sold as 969MS, available from Davison Chemical Division, W. R. Grace & Co., Baltimore, Md.

The high molecular weight ethylene/1-hexene copolymer resin portion was produced with a high productivity titanium/magnesium catalyst used in conjunction with an organoaluminum cocatalyst. Those high productivity catalysts, as well as a polymerization process to make such ethylene copolymers, are described in U.S. 4,325,837, the disclosure of which is herein incorporated by reference. The high molecular weight resin portion had a density of 0.9307 g/cc and a high load melt index (HLMI) of 1.7 g/10 min.

The sample preparation for each component was prepared in accordance with the following procedures.

The virgin low molecular weight resin portion, in fluff form, was placed in a double cone blender (tumble blend), operating under a nitrogen blanket at room temperature, at 20 rpm. The following dry stabilizers were added:

a) 0.02 weight percent, based on the weight of the low molecular weight resin portion, BHT (butylated hydroxytoluene);

b) 0.02 weight percent, based on the weight of the low molecular weight resin portion, Irganox 1010®, also known as tetrakis(methylene 3-(3,5-di-t-butyl-4-hydroxyphenyl)propionate) methane, available from Ciba-Geigy Corp.; and

c) 0.03 weight percent, based on the weight of the low molecular weight resin portion, DLTDP (dilaurylthiodipropionate)

The mixture was tumbled for 30 minutes.

The virgin high molecular weight resin portion in fluff form, was placed in a fiber drum, operating in air at room temperature, at 32 rpm.

The following dry stabilizers were added:

a) 0.02 weight percent, based on the weight of the high molecular weight resin portion. BHT;

b) 0.02 weight percent, based on the weight of the low molecular weight resin portion, Irganox 1010®, also known as tetrakis(methylene 3-(3,5-dit-butyl-4-hydroxyphenyl)propionate) methane, available from Ciba-Geigy Corp.; and

c) 0.02 weight percent, based on the weight of the high molecular weight resin portion, DLTDP (dilaurylthiodipropionate).

The mixture was tumbled for 30 minutes.

Automatic Melt Blending Process

After stabilization, each resin portion was placed in separate feeders. Both portions were fed at the appropriate ratio, by weight, to prepare the desired blend product, to a size 2 Farrel Continuous Mixer (FCM) line. The FCM line was operated at the following standard processing conditions:

```
Process Rate, kg/hr                                 80
FCM
    Barrel heat                                  neutral
    Rotor Speed, rpm                               950
    Ribbon Temp., °C                               200
3 1/2 inch hot melt extruder (20/20 screen pack)
    Barrel Temp., °C                               210
    Screw Speed, rpm                               62
    Melt Discharge Temp., C                     220 - 230
```

The results and properties of the ethylene polymer blend products prepared as described above, are summarized below in Table IV.

Table IV

| Blend Properties | | | | | | | |
|---|---|---|---|---|---|---|---|
| Blend Run | Composition | | MI, g/10 min | HLMI, g/10 min | Density, g/cc | Flexural Modulus, kpsi | ESCR, hrs |
| | Low Mol Wt, wt % | High Mol Wt, wt % | | | | | |
| 101 | 100 | 0 | 0.87 | 60 | 0.9650 | 1600 | 32 |
| 102 | 92 | 8 | 0.53 | 40 | 0.9616 | 1540 | 77 |
| 103 | 88 | 12 | 0.43 | 33 | 0.9603 | 1520 | 160 |
| 104 | 84 | 16 | 0.34 | 27 | 0.9592 | 1440 | 270 |

EXAMPLE II

Sample Preparation

Blends involving the incorporation of recycled polymer portions were prepared in the following manner. The low molecular weight polymer portion was a recycled polyethylene resin from The Center for Plastic Recycling, Rutgers University in New Brunswick, N.J. The recycle, or post-consumer, ethylene polymer portion was originally prepared from a chromium-based polymerization catalyst. The recycled, low molecular weight resin portion had a melt index (MI) of 0.76 g/10 min, a high load melt index (HLMI) of 61 g/10 min, and a density of 0.9637 g/cc.

The high molecular weight resin portion was obtained using a titanium/magnesium catalyst system described in U.S. 4,363,746 and U.S. 4,326,988, both herein incorporated by reference, using an alkylaluminum halide to precipitate the catalyst system. Four different high molecular weight ethylene/1-hexene copolymer portions were used to blend with the low molecular weight ethylene recycle resin portion described above. The properties of the four high molecular weight resin portions are given below in Table V.

Table V

| High Molecular Weight Portion Sample # | HLMI, g/10 min | Density, g/cc |
|---|---|---|
| 1 | 2.5 | 0.933 |
| 2 | 4.0 | 0.933 |
| 3 | 5.6 | 0.934 |
| 4 | 7.7 | 0.934 |

Recycle Blend Preparation

The two resin portions were placed in a container at the appropriate weight ratio, based on weight of total blend product.

The following dry stabilizers were also added to the blend:

0.04 weight percent, based on the weight of the total blend product, of Irgafos 168®, also known as tris-(2,4-di-tert-butylphenyl)phosphite available from Ciba-Geigy Corp. ; and

0.04 weight percent, based on the weight of the total blend product, of Irganox 1010®, also known as tetrakis (methylene 3-(3,5-di-t-butyl-4-hydroxyphenyl)propionate) methane, available from Ciba-Geigy Corp.; and

0.02 weight percent, based on the weight of the total blend product, of calcium stearate.

The contents of the container were then hand blended (tumbled) for about 5 minutes.

Then 5 pounds of each blend product was fed to a 1 1/2 inch Davis Standard single screw extruder and processed at the following conditions.

| Extruder Length/Diameter Ratio | 24/1 |
| Screw Design | Barrier |
| Screw Speed, rpm | 100 |
| Process Rate, lb/hr | 35 |
| Melt Discharge Temp., °C | 204 |

The results and properties of the blend products, prepared as described above, are summarized below in Table VI.

Table VI

| Blend Run | High Mol Wt. Portion Sample # Designation | Composition | | MI, g/10 min | HLMI, g/10 min | Density, g/cc | Flex. Mod., kpsi | ESCR, hrs. | Tensile Yield, psi | Strain Break, % |
| | | Low Mol Wt. Portion, Wt % | High Mol Wt. Portion, Wt % | | | | | | | |
|---|---|---|---|---|---|---|---|---|---|---|
| 201 | 1 | 100 | 0 | 0.72 | 64 | 0.9636 | 252 | <24 | 4520 | 110 |
| 202 | 1 | 85 | 15 | 0.28 | 32 | 0.9589 | 216 | 68 | 4160 | 330 |
| 203 | 1 | 70 | 30 | 0.14 | 15 | 0.9541 | 195 | 388 | 3840 | 600 |
| 204 | 2 | 100 | 0 | 0.82 | 63 | 0.9636 | 244 | <24 | 4390 | 96 |
| 205 | 2 | 85 | 15 | 0.45 | 37 | 0.9590 | 217 | <24 | 4150 | 130 |
| 206 | 2 | 70 | 30 | 0.31 | 20 | 0.9555 | 196 | 115 | 3940 | 150 |
| 207 | 3 | 100 | 0 | 0.75 | 62 | 0.9641 | 236 | <24 | 4360 | 32 |
| 208 | 3 | 85 | 15 | 0.56 | 38 | 0.9593 | 214 | <24 | 4120 | 66 |
| 209 | 3 | 70 | 30 | 0.38 | 26 | 0.9564 | 186 | 125 | 4000 | 190 |
| 210 | 4 | 100 | 0 | 0.76 | 60 | 0.9636 | 239 | <24 | 3840 | 53 |
| 211 | 4 | 85 | 15 | 0.56 | 42 | 0.9595 | 224 | <24 | 4220 | 190 |
| 212 | 4 | 70 | 30 | 0.42 | 36 | 0.9554 | 205 | 104 | 4000 | 120 |

While this invention has been described in detail for the purpose of illustration, it not to be construed as limited thereby but is intended to cover all changes and modifications within the spirit and scope thereof.

10

**Claims**

1. A ethylene polymer blend composition comprising or consisting essentially of the product of:
   (a) less than or equal to about 35 weight percent of a high molecular weight polyethylene prepared from a titanium-based catalyst system having a high load melt index (HLMI) within a range of about 0.2 to about 25 g/10 min, a density within a range of about 0.91 to about 0.94 g/cc, a heterogeneity index (HI) of less than or equal to about 10, and having a content of copolymerized comonomer within a range of about 0.01 to about 10 mole percent of at least one olefin having from about 3 to about 10 carbon atoms per molecule; and
   (b) greater than or equal to about 65 weight percent of a low molecular weight polyethylene prepared from a chromium-based catalyst system having a melt index (MI) within a range of about 0.1 to about 5 g/10 min, a density with a range of about 0.945 to about 0.98 g/cc, and a heterogeneity index (HI) of greater than or equal to about 6.

2. A composition according to claim 1 wherein said high molecular weight polyethylene comprises less than or equal to about 30 weight percent and wherein said low molecular weight polyethylene comprises greater than or equal to about 70 weight percent.

3. A composition according to claim 1 or 2 wherein said high molecular weight portion has a high load melt index (HLMI) within a range of 2 to 12 g/10 min, a density with a range of 0.920 to 0.935 g/cc, and a heterogeneity index (HI) within a range of 2 to 7.

4. A composition according to claim 1, 2 or 3 wherein said low molecular weight polyethylene has a melt index within a range of 0.1 to 1.5 g/10 min, a density within a range of 0.95 to 0.97 g/cc, and a heterogeneity index (HI) within a range of 6 to 30.

5. A composition according to one of the preceding claims wherein said low molecular weight polyethylene is a recycled (post-consumer) polyethylene.

6. A process to produce an ethylene polymer resin mixture comprising or consisting essentially of blending:
   (a) less than or equal to about 35 percent parts by weight of a high molecular weight polyethylene prepared from a titanium-based catalyst system having a high load melt index (HLMI) within a range of about 0.2 to about 25 g/10 min, a density within a range of about 0.91 to about 0.94 g/cc, a heterogeneity index (HI) of less than or equal to about 10, and having a content of copolymerized comonomer within a range of about 0.01 to about 10 mole percent of at least one olefin having from about 3 to about 10 carbon atoms per molecule; and
   (b) greater than or equal to about 65 weight percent of a low molecular weight polyethylene prepared from a chromium-based catalyst system having a melt index (MI) within a range of about 0.1 to about 5 g/10 min, a density with a range of about 0.945 to about 0.98 g/cc, and a heterogeneity index (HI) of greater than or equal to about 6.

7. A process according to claim 6 wherein said high molecular weight polyethylene comprises less than or equal to 30 weight percent and wherein said low molecular weight polyethylene comprises greater than or equal to about 70 weight percent.

8. A process according to claim 6 or 7 wherein said high molecular weight portion has a high load melt index (HLMI) within a range of 2 to 12 g/10 min, a density with a range of 0.920 to 0.935 g/cc, and a heterogeneity index (HI) within a range of 2 to 7.

9. A process according to claim 6, 7 or 8 wherein said low molecular weight polyethylene has a melt index within a range of 0.1 to 1.5 g/10 min, a density within a range of 0.95 to 0.97 g/cc, and a heterogeneity index (HI) within a range of 6 to 30.

10. A composition according to one of the claims 6 to 9 wherein said low molecular weight polyethylene is a recycled (post-consumer) polyethylene.

11. A process according to one of the claims 6 to 10 wherein said high molecular weight ethylene polymer and said low molecular weight ethylene polymer are blended as polymer fluff to obtain a polymer fluff blend as the product.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 100 843 (PHILLIPS PETROLEUM COMPANY) <br> * page 4, line 1 - page 5, line 2; claims * <br> --- | 1-11 | C08L23/04 |
| A | BE-A-647 311 (PHILLIPS PETROLEUM COMPANY) <br> *whole document* <br> --- | 1-11 | |
| A | GB-A-790 115 (PHILLIPS PETROLEUM COMPANY) <br> *whole document* <br> ----- | 1-11 | |

TECHNICAL FIELDS SEARCHED (Int. Cl.5)

C08L

The present search report has been drawn up for all claims

| Place of search | Date of completion of the search | Examiner |
|---|---|---|
| THE HAGUE | 25 NOVEMBER 1992 | CLEMENTE GARCIA R. |